# EUROPEAN PATENT APPLICATION

(11) **EP 2 499 989 A1**
(43) Date of publication of application: **19.09.2012**
(21) Application number: 11158911.5
(22) Date of filing: 18.03.2011
(51) Int. Cl.: A61C 3/06, A61C 15/00

(54) **Flexible band file with improved control for dental work in orthodontics, in conservative dentistry and in prophylaxis**

(71) Applicant: SDC Switzerland SA, 6926 Collina d'Oro (CH)
(72) Inventor: Rek, Peter, 6984, Pura (CH)
(74) Representative: Branca, Emanuela

(57) **Abstract**

A flexible band file with improved control for dental work in orthodontics, in conservative dentistry and in prophylaxis comprises a flexible abrasive foil (12), extending mainly longitudinally, and provided at both ends with grip elements (13) fixedly connected to the foil (12) to constitute a single piece.

## Description

The present invention refers to a flexible band file with improved control for dental work in orthodontics, in conservative dentistry and in prophylaxis.

Currently, flexible band files for dental work in orthodontics, in conservative dentistry and in prophylaxis consist of a flexible band of abrasive material, metallic or plastic, having a length of about 15 cm, which the dentist holds directly with his hands at the opposite ends to carry out the work around a tooth.

Such files are used to remove excess composite in the proximal areas of reconstructed teeth, to shape the tooth and to round the sides after interproximal reduction, to restore the natural shape of the tooth after interproximal reduction. They are also used to polish and clean tooth enamel.

The characteristics of known flexible band files make them not very ergonomic for the dentist to handle. Indeed, holding the ends of the band with bare hands involves significant difficulties in ensuring a sufficient grip to transmit the movement.

Another very important aspect is that of the sometimes excessive pressure that is exerted on the teeth themselves when working manually.

Moreover, in the case of metallic band there is always the risk of the operator being able to injure himself with the thin and sharp end of the band.

Given the above introduction it is particularly difficult for the dentist to apply constant conditions to the tooth during the entire treatment to ensure uniform work and therefore also an optimal appearance.

The purpose of the present invention is to make a flexible band file with improved control for dental work in orthodontics, in conservative dentistry and in prophylaxis, which is more ergonomic and precise for handling by the dentist.

Another purpose of the present invention is to make a flexible band file with improved control for dental work in orthodontics, in conservative dentistry and in prophylaxis, which can also be applied to an oscillating handpiece.

Another purpose of the present invention is to make a flexible band file with improved control for dental work in orthodontics, in conservative dentistry and in prophylaxis that is particularly simple and functional, with low costs.

These purposes according to the present invention are accomplished by making a flexible band file with improved control for dental work in orthodontics, in conservative dentistry and in prophylaxis as outlined in claim 1.

Further characteristics are foreseen in the dependent claims.

The characteristics and advantages of a flexible band file with improved control for dental work in orthodontics, in conservative dentistry and in prophylaxis according to the present invention will become clearer from the following description, given as an example and not for limiting purposes, referring to the attached schematic drawings, in which:

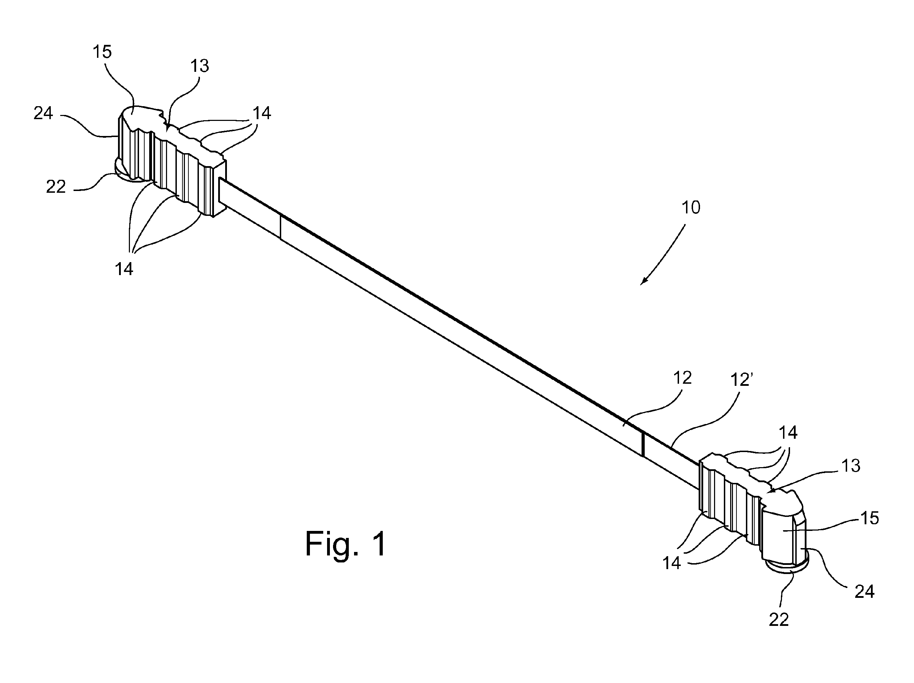

figure 1 is a perspective view of a flexible band file with improved control for dental work in orthodontics, in conservative dentistry and in prophylaxis according to the present invention;
figure 2 is a perspective view of the file of figure 1 also comprising a shank for connecting to an oscillating handpiece, not shown;
figures 3a and 3b show as a detail the shank of figure 2, from two opposite sides, respectively;
figures 4a and 4b show two examples of positioning of the file according to the invention in dental work.

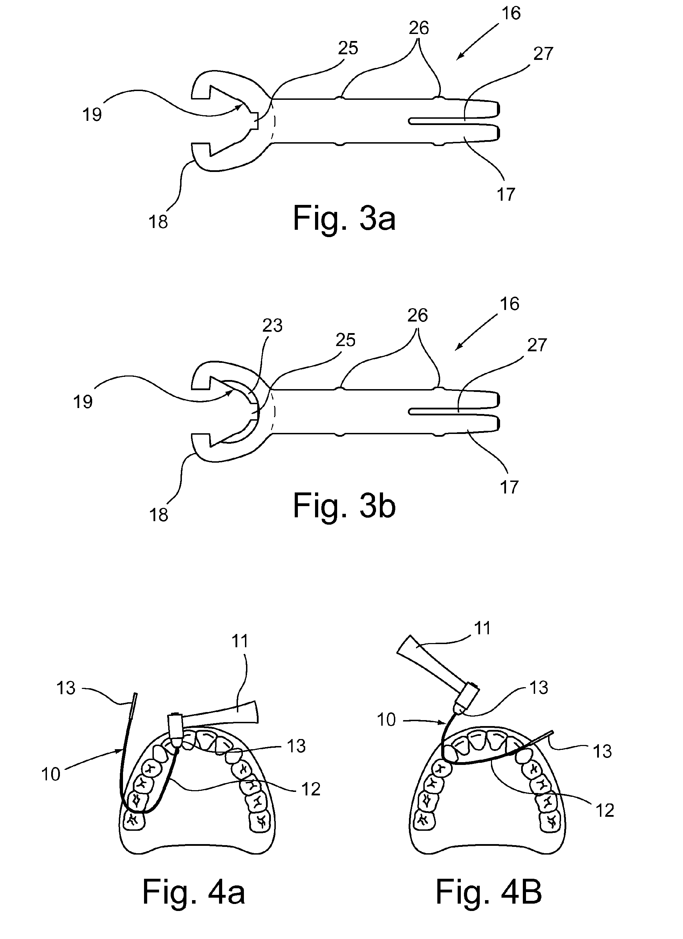

With reference to the figures, a flexible band file with improved control for dental work in orthodontics, in conservative dentistry and in prophylaxis is shown, wholly indicated with 10, possibly provided with a shank for connecting to an oscillating handpiece 11, shown schematically in figures 4a and 4b.

The file 10 comprises a flexible abrasive foil 12, extending mainly longitudinally, provided at both ends with grip elements 13, fixedly connected to the foil 12 to constitute a single piece.

The grip elements 13 are for example made from polymeric material or even metallic material and are fixedly connected to the foil since they are applied to it with over-moulding techniques, in other words injected hot.

The flexible abrasive foil 12 is for example made from metallic material, such as stainless steel, diamond-tipped on one or both sides, or else from plastic material, like for example a sheet of polyester, onto which abrasive material is glued, for example aluminium oxide, on one or both sides. At the same time there is a portion of the foil 12 that is not abrasive 12' to allow the foil 12 to be introduced in the contact point of two teeth without eliminating this contact point, which it is important to be able to keep.

The grip elements 13, according to a preferred embodiment, comprise an articulated surface extension with a series of recesses and ridges that identify ergonomic portions 14 for better manual gripping and/or at least at one end a coupling portion 15 with a shank 16 for connecting to the oscillating handpiece 11, in which the shank 16 is removably attached to the file 10.

The grip elements 13 of the file 10, according to a preferred embodiment of the invention, are made symmetrical with respect to a middle plane transversal to the extension of the flexible abrasive foil 12, in other words each provided with a coupling portion 15, for ambidextrous use of the file both manually and coupled with the oscillating handpiece 11.

The shank 16 comprises a tang 17 for connecting to the handpiece 11 and a grasping head 18 extending in one piece at an end of the tang 17 for engagement with any one of the two coupling portions 15 of the file 10.

The ergonomic portions 14 in the depicted example are made by means of three parallel ribs, arranged perpendicular to the longitudinal extension of the abrasive foil 12, present on both the opposite sides of the grip elements 13, but they can have any other shape suitable for improving the manual grip of the operator.

The coupling portions 15 of the grip elements 13 are equipped with a shape matching a shaped seat 19 of the grasping head 18 of the shank 16.

In particular, the coupling portions 15, on both sides, have a succession of surfaces meeting at an angle to define a sectioned profile for coupling with the counter-shaping of the seat 19 of the grasping head 18. They also comprise an annular ridge 22 matching an annular recess 23 of the shank 16 for an axial snapengagement between file 10 and shank 16. Recess and ridge could according to the invention also be respectively arranged on the opposite elements.

The coupling portions 15 with the shank 16 can be rounded at the ends, example not shown, or else they could have an anti-rotation tooth 24 projecting outwards and arranged aligned with the longitudinal axis of the file 10 to couple better with the grasping head 18 of the shank 16, provided on the inner surface of the seat 19 with a matching longitudinal groove 25.

The shank 16 can also be provided with at least one annular ridge 26 on the elastic tang 17, in the example shown with two annular ridges, for a snap-coupling with the handpiece 11. Indeed, the first annular ridge 26 is positioned inside the oscillating handpiece for better gripping.

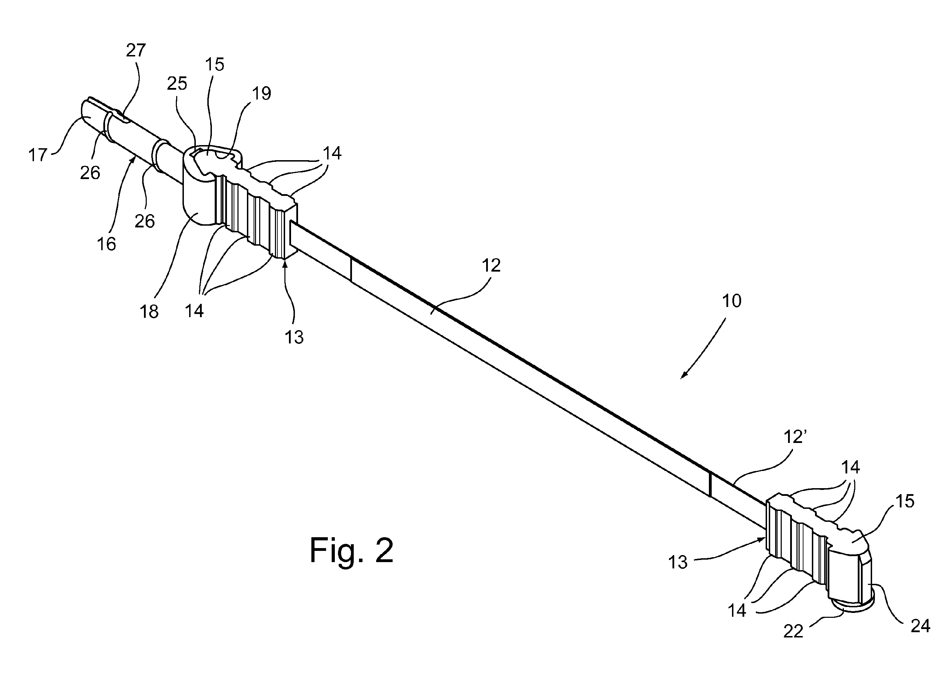

In figure 2, as an example, the tang 17 is shown with a longitudinal opening 27, of the bayonet type, which allows a certain deformation during insertion in the handpiece 11. The elastic tang 17, according to the invention, can also be made differently.

The flexible band file with improved control according to the invention can be used manually, if the dentist grips the ergonomic portions 14 of the grip elements 13 at the ends of the file 10 with the classical operation of longitudinal movement thereof.

The file according to the invention can also be advantageously applied to an oscillating handpiece 11 by means of one of the two coupling portions 15 of the grip elements 13. In this way, the handpiece sets one end of the file 10 in movement and the dentist holds it at the opposite end to guide its movement around a tooth in order to round the teeth to give a new natural shape after reduction treatments.

The use of the file 10 according to the invention wound around a tooth even covering an angle of 180°-200°, as shown in figures 4a and 4b creates a particular need to foresee anti-rotation means between the grip elements 13 of the file 10 and the shank 16.

Moreover, they improve the counteraction to the relative rotations due to the vibrations between the coupling portion 15 of the file 10 and the grasping head 18 of the shank 16, when connected to the oscillating handpiece 11.

The flexible band file with improved control for dental work in orthodontics, in conservative dentistry and in prophylaxis object of the present invention has the advantage of ensuring an ergonomic and safer grip by the dentist in manual use.

When used in connection with the oscillating handpiece, the file according to the invention advantageously transmits to the tooth being worked upon up to five times less pressure compared with conventional manual use, said values having been scientifically tested by the "Technikum" Institute of Darmstadt in collaboration with the University of Heidelberg in Germany.

The file according to the invention, according to what has been outlined, allows the work time to be reduced.

Advantageously, it has a shorter length than conventional band-files, thanks to a different transmission of the forces.

It can also be advantageously connected to an oscillating handpiece in a simple manner with the minimum number of coupling details, for example through a universal shank already used in other types of files.

It can also advantageously be provided with abrasive material on one or both sides.

The flexible band file with improved control for dental work in orthodontics, in conservative dentistry and in prophylaxis thus conceived can undergo numerous modifications and variants, all of which are covered by the invention; moreover, all of the details can be replaced by technically equivalent elements. In practice, the materials used, as well as the sizes, can be whatever according to the technical requirements.

## Claims

1. Flexible band file with improved control for dental work in orthodontics, in conservative dentistry and in prophylaxis comprising a flexible abrasive foil (12) extending mainly longitudinally, **characterised in that** said flexible abrasive foil (12) is provided at both ends with grip elements (13) fixedly connected to said foil (12) to constitute a single piece.

2. Flexible file according to claim 1, **characterised in that** said grip elements (13) comprise ergonomic portions (14) for manual gripping.

3. File according to claim 2, **characterised in that** said ergonomic portions (14) comprise a plurality of parallel ribs arranged perpendicular to the longitudinal extension of said abrasive foil (12), said ergonomic portions (14) being present on both opposite sides of said grip elements (13).

4. File according to any one of the previous claims, **characterised in that** at least one of said grip elements (13) comprises a coupling portion (15) able to be coupled with a shank (16) that can be connected to an oscillating handpiece (11).

5. File according to claim 4, **characterised in that** both of said grip elements (13) comprise said coupling portion (15) able to be coupled with said shank (16), said grip elements (13) being symmetrical with respect to a middle plane transversal to the extension of said flexible abrasive foil (12).

6. File according to claims 4 or 5, **characterised in that** it comprises a shank (16) provided with a tang (17), which can be connected to an oscillating handpiece (11), and a grasping head (18) extending as a single piece at an end of said tang (17) for the removable engagement with said gripping means (13).

7. File according to claim 6, **characterised in that** said coupling portions (15) of said grip elements (13) are equipped with a shape matching a shaped seat (19) of said grasping head (18) of the shank (16).

8. File according to claim 7, **characterised in that** said coupling portions (15) comprise anti-rotation means (24) able to be coupled with matching means (25) of said seat (19) of said grasping head (18) of the shank (16).

9. File according to claim 8, **characterised in that** said anti-rotation means comprise an anti-rotation tooth (24) projecting towards the outside of said grasping means (15) and arranged aligned with the longitudinal axis of the file (10) able to be coupled with a longitudinal groove (25) present on the inner surface of said seat (19) in a matching position.

10. File according to any one of claims 6 to 9, **characterised in that** said shank (16) comprises at least one annular ridge (26) on the elastic tang (17).
